# EUROPEAN PATENT APPLICATION

(11) **EP 3 384 783 A1**
(43) Date of publication of application: **10.10.2018**
(21) Application number: 18165969.9
(22) Date of filing: 05.04.2018
(51) Int. Cl.: A23L 5/10

(54) **METHOD AND APPARATUS FOR COOKING FOOD PRODUCTS**

(30) Priority: 06.04.2017 IT 201700038149
(71) Applicant: Delizie Natura S.R.L., 33061 Rivignano Teor (UD) (IT)
(72) Inventor: Sivilotti, Gabriele, 33033 Codroipo (UD) (IT)
(74) Representative: Petraz, Gilberto Luigi

(57) **Abstract**

Method and apparatus for cooking food products comprising per-cooking on the grill, temperature reduction, vacuum packaging, sous-vide cooking and pasteurizing, and food product thus obtained.

## Description

### FIELD OF THE INVENTION

Embodiments described here concern a method for cooking food products, both of protein origin, such as meat or fish for example, and of vegetable origin, such as for example vegetables or other similar or comparable products.

The food products obtained using this method can be stored at low temperature for a medium to long period of time.

Furthermore, the food products obtained using this method can be eaten by consumers once heated or taken to room temperature.

Embodiments of the present invention also concern an apparatus for cooking food products.

### BACKGROUND OF THE INVENTION

It is known that food products obtained by cooking on the grill have organoleptic properties which are highly appreciated by consumers, so that there is a constant demand for such food products.

One disadvantage of food products cooked on the grill is that such foods are difficult to preserve.

For example, a cooking method is known which provides to cook the food products on the grill and to cool them rapidly, by freezing or deep-freezing.

However, the food products thus produced, once heated, do not keep their consistency and/or organoleptic properties.

Moreover, it is known that foods containing fats, after prolonged exposure to a source of heat, can possibly generate the combustion of the fats leaking from the surface of the food products. As is known, such combustion can develop compounds harmful to health.

For these reasons, the food products on the market that bear the words "cooked on the grill" or suchlike are actually steamed, a type of cooking that does not give them the particular organoleptic properties required. Subsequently, these products are made to pass through an incandescent roller, having a preforming element which impresses on them the typical dark signs that characterize cooking on the grill.

One disadvantage of this known method, therefore, is that it confers on the food products only an appearance similar to food cooked on the grill, without contributing the organoleptic characteristics of this type of cooking.

Similarly, a method is known in which the raw food products are made to pass directly through the incandescent roller. For example, in document US-A-2008/0145495 a method is described in which a meat-based food product is extruded in a cylindrical mold and subjected to a rapid step of making the "grill-like" impressions using incandescent rollers. Using this technique, the rollers are made to slide rapidly over the food product which, therefore, is put in direct contact with the incandescent surface, so as to generate a localized carbonization which defines some dark signs or striations aesthetically similar to the typical signs of a conventional cooking on the grill. However, this treatment is not a cooking or pre-cooking on the grill, but a mere localized aesthetic intervention on the surface.

Therefore, also this known method does not contribute the organoleptic properties required by consumers to the food products either, and limits itself to masking its outer appearance.

In particular, the method described in document US-A-2008/0145495 provides a step of flavoring the food product by means of a smoke-flavored compound precisely because the step of producing the aesthetic impressions described above by means of the incandescent rollers is not sufficient to confer on the food products thus treated the organoleptic properties and the characteristic flavor of a product cooked on the grill.

Moreover, the food products obtained with these methods, once heated, do not have a consistency comparable to that of properly grilled foods.

Another example of cooking is described in document EP-A-2.532.975, which describes a low-pressure cooking apparatus for food products.

There is therefore a need to perfect a method and an apparatus for cooking food products on the grill that can overcome at least one of the disadvantages of the state of the art.

In particular, one purpose of the present invention is to perfect a method and an apparatus for cooking food products on the grill that confer on these food products both the appearance and the organoleptic properties of food cooked on the grill.

Another purpose of the present invention is to perfect a method which allows to preserve the organoleptic properties of the food products thus obtained, even for a long period.

Another purpose of the present invention is to perfect a method which allows to prevent the formation of compounds harmful to health in food products during cooking.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, the present invention concerns a method to make food products that comprises the following steps:
i) pre-cooking the food products on the grill by means of a source of heat and a cooking grill in which the food products are stably positioned, in direct contact with grilling elements of the cooking grill, said food products and said cooking grill being reciprocally static during said pre-cooking on the grill, wherein the source of heat heats, by means of irradiation, both the grilling elements and also the food products and is separated and distanced by a distance from said cooking grill;
ii) vacuum packaging the food products arriving from step i); and
iii) cooking sous-vide the food products previously packaged in step ii).

According to possible embodiments, step iii), in accordance with the method of the present invention, provides to immerse the vacuum-packed food products into a cooking liquid.

According to possible embodiments, step iii) could provide to use a steam oven.

According to possible embodiments, the method according to the present invention could provide a cooling step of the food products between step i) and step ii).

Embodiments of the present invention also concern a food product obtainable by means of the method described above.

Other embodiments concern an apparatus for cooking food products. According to one embodiment, the apparatus comprises:
- a pre-cooking grilling device comprising a source of heat and a cooking grill in which the food products are able to be positioned in a stable manner, in direct contact with grilling elements of the cooking grill, the food products and the cooking grill being reciprocally static during the pre-cooking on the grill, wherein the source of heat is configured to heat both the grilling elements and the food products by irradiation and is separated by a distance from the cooking grill;
- a vacuum packaging device for the food products pre-cooked by the source of heat and the cooking grill;
- a sous vide cooking device for the vacuum-packed food products.

These and other aspects, characteristics and advantages of the present disclosure will be better understood with reference to the following description, drawings and attached claims. The drawings, which are integrated and form part of the present description, show some forms of embodiment of the present invention, and together with the description, are intended to describe the principles of the disclosure.

The various aspects and characteristics described in the present description can be applied individually where possible. These individual aspects, for example aspects and characteristics described in the attached dependent claims, can be the object of divisional applications.

It is understood that any aspect or characteristic that is discovered, during the patenting process, to be already known, shall not be claimed and shall be the object of a disclaimer.

### BRIEF DESCRIPTION OF THE DRAWINGS

These and other characteristics of the present invention will become apparent from the following description of some embodiments, given as a non-restrictive example with reference to the attached drawings wherein:
- fig. 1 shows a schematic block diagram of a cooking apparatus in accordance with the present invention,
- fig. 2 shows a schematic view in perspective of a component of the cooking apparatus of fig. 1.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We will now refer in detail to the various embodiments of the present invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

The present description can provide other embodiments and can be obtained or executed in various other ways. We must also clarify that the phraseology and terminology used here is for the purposes of description only, and cannot be considered as limitative. Before describing these embodiments, we must also clarify that the present description is not limited in its application to details of the construction and disposition of the components as described in the following description using the attached drawings. The present description can provide other embodiments and can be obtained or executed in various other ways. We must also clarify that the phraseology and terminology used here is for the purposes of description only, and cannot be considered as limitative.

All the intervals reported here shall be understood to include the extremes, including those that report an interval "between" two values, unless otherwise indicated.

The present description also includes the intervals that derive from uniting or overlapping two or more intervals described, unless otherwise indicated.

The present description also includes the intervals that can derive from the combination of two or more values taken at different points, unless otherwise indicated.

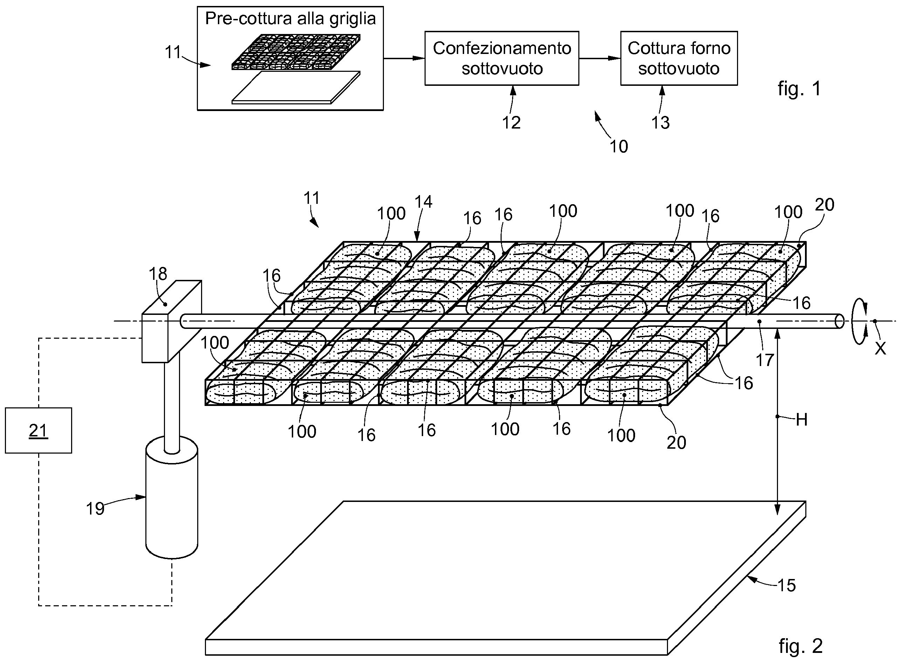

With reference to the attached fig. 1, a cooking apparatus 10 for food products 100 in accordance with the present invention is described.

The cooking apparatus 10 comprises a pre-cooking grilling device 11, a vacuum packaging device 12 for the food products 100 pre-cooked on the grill and a sous vide cooking device or oven 13 for the vacuum-packed food products 100.

In accordance with the embodiments described using fig. 2, the pre-cooking grilling device 11 comprises a source of heat 15 and a cooking grill 14, for example of a box-like shape, in which the food products are able to be positioned in a stable manner, in direct contact with grilling elements 16 of the cooking grill 14. The food products 100 and the cooking grill 14 are reciprocally static during the pre-cooking on the grill. Furthermore, the source of heat 15 is configured to heat both the grilling elements 16 and the food products 100 by irradiation and is separated and distanced by a distance H from the cooking grill 14.

Preferentially, the source of heat 15 develops essentially along a plane parallel to a main development and lying plane of the cooking grill 14.

In possible embodiments, the source of heat 15 can be disposed above, or below the cooking grill 14. For example, the source of heat 15 can be disposed in a lower position than the cooking grill 14. In other variants, the source of heat 15 can be disposed at the side of the cooking grill 14.

For example, the source of heat 15 can be a heating surface, such as a radiating plate or similar heating device with an essentially planar shape, or a coil-type heating system with an electrical resistance, a gas heating system or suchlike. The source of heat 15 can also be an expanse of burning embers with an essentially planar development. The embers can be burning embers of certified wood suitable for cooking food. In the case of burning embers, preferentially the source of heat 15 is disposed horizontally, under the cooking grill 14.

In some embodiments, the cooking grill 14, which can for example be of a box-like shape, can be a reticular structure defined by the crossing of filiform grilling elements 16, disposed for example in a crossed manner. The cooking grill 14, in particular, can be defined by two layers of grills 20 formed by crossed grilling elements 16, between which a plurality of food products 100 to be subjected to pre-cooking on the grill can be disposed in a stable manner. The two layers of grills 20 have a flat development and could possibly be laterally connected by grilling elements 16 which, in fact, could, in this variant, close the box-like structure laterally. In particular, the layers of grills 20 can clamp the food products 100 between them so that they cannot move, and any unwanted extraction and fall during the pre-cooking grilling is prevented.

In possible embodiments, the cooking grill 14 is rotatable around its axis of rotation X, advantageously parallel to the lying plane of the source of heat 15, in this way selectively presenting different zones of the food products 100 facing toward the source of heat 15. The axis of rotation X, in particular, can be horizontal, if the source of heat 15 is disposed above or below the cooking grill 14, lying on an essentially horizontal plane.

In possible embodiments, it is also possible to move the cooking grill 14 linearly toward/away from the source of heat 15.

In possible other embodiments, the cooking grill 14 can also be moved according to a combination of rotation and linear movement toward/away from the source of heat 15.

According to possible embodiments, for the purposes of linear movement, the pre-cooking grilling device 11 can comprise a linear actuator 19, configured to move the cooking grill 14 toward/away from the source of heat 15. The linear movement, in particular, can be vertical, if the source of heat 15 is disposed above or below the cooking grill 14.

According to possible embodiments, for the purposes of rotating the cooking grill 14 around the axis of rotation X, the pre-cooking grilling device 11 can comprise a rotary actuator 18 configured to rotate the cooking grill 14 around the axis of rotation X. The rotary actuator 18 can be rotatably connected to a rotation shaft 17 coaxial with the axis of rotation X, which rotatably supports the cooking grill 14.

Usually, an actuation element, as used in association with embodiments described here, can be an actuator with intrinsically linear movement, or can be configured to convert a circular movement into a linear movement, in the case of the linear actuator 19, or an actuator with intrinsically circular movement, or can be configured to convert a linear movement into a circular movement, in the case of the rotary actuator 18. The conversion, in both cases, can commonly be made by means of types of mechanism selected from a group consisting of: screw actuators, such as a screw jack, ball screw and roller screw actuators, or wheel and axle, for example, drum, gear, pulley or shaft, actuators, such as a lifting cable, a winch, a rack and a pinion assembly, a chain transmission, a belt transmission, rigid chain actuators or rigid belt actuators.

The linear actuator 19 and rotary actuator 18 can each comprise a motor member configured to move the cooking grill 14, respectively linearly or in rotation, which is made to function by an energy source, for example an electric current, a hydraulic fluid pressure or a pneumatic pressure. The linear actuator 19 and rotary actuator 18 can comprise a motor member chosen from a group consisting of: an electric motor, a pneumatic motor, a hydraulic piston, a piezoelectric actuator. A motor member as used in association with the embodiments described here can be a motor member selected from a group comprising: an electric motor, an electric stepper motor, a magnetic motor, a linear axle with a motor, a linear motor, such as a mechanical linear motor, a piezoelectric linear motor, an electromagnetic linear motor, an electromechanical motor, an electromagnet, a motor reduction unit, in particular a direct current motor reduction unit.

According to possible embodiments, the apparatus 10 can also comprise a command and control unit 21, which is operatively connected to the linear actuator 19 and rotary actuator 18 and controls and commands the drive according to a cooking cycle which can be selected, for example by an operator using a command and control interface, between a plurality of pre-set cooking cycle programs and memorized in the command and control unit 21, also according to the type of food product to be subjected to pre-cooking on the grill. The program that influences each cooking cycle, according to the type of food product, can be configured to select at least the cooking times, the times of the steps of rotation and linear movement of the cooking grill 14 toward/away from the source of heat 15, the speed of rotation and of the linear movement of the cooking grill 14 toward/away from the source of heat 15, the distance of the cooking grill 14 from the source of heat 15, and possibly also any possible variation of the temperature of the source of heat 15.

In some embodiments, the cooking apparatus 10 can be provided with suitable systems and means to transport the food products along the cooking apparatus 10 itself, such as linear conveyors, rotary tables or similar transport devices, and possibly also means to remove, deliver and handle the food products 100, advantageously robotized or in any case automatic, to make the passage of the food products along the working line of the cooking apparatus 10 automated or semi-automatic, at least from the pre-cooking grilling device to the vacuum packaging device 12 and the subsequent sous vide cooking device 13.

Embodiments described here concern a method for cooking food products in accordance with the present invention comprising the following steps:
i) pre-cooking the food products on the grill by means of a source of heat 15 and a cooking grill 14 of a box-like shape in which the food products 100 are positioned in a stable manner, in direct contact with grilling elements 16 of the cooking grill 14, the food products 100 and the cooking grill 14 being reciprocally static during the pre-cooking on the grill, in which the source of heat 15 heats both the grilling elements 16 and the food products 100 by irradiation and is separated and distanced by a distance H from the cooking grill 14;
ii) vacuum packaging of the food products 100 coming from step i);
iii) sous vide cooking of the food products 100 previously packaged in step ii).

In possible embodiments of the method according to the present description, the food product 100 can be meat, in particular a cut of meat which can be: ribs, chicken breast, thighs, upper thighs or quarters of chicken, pork, sausages, local sausages, frankfurters, cuts of meat for roasts, veal or pork chops, beef steaks, veal or pork steaks, or other types of meat and cuts of meat.

In other possible embodiments of the method according to the present description, the food product 100 can be vegetables, for example cut into slices of adequate thickness.

The product thus obtained can be kept in the refrigerator in the home or restaurant and then consumed as such or after short heating, for example by microwave oven.

According to possible embodiments, step i) provides to cook the food products on the surface using a grill, whether gas, electric or embers.

In particular, by "surface cooking" we mean that the surface of the food product is cooked without direct contact between the source of heat 15 and the food product 100.

By way of non-restrictive example, the cooking grill is able to carry out step i) in accordance with the present invention, being configured to reach a temperature comprised between 80°C and 300°C, preferably between 100°C and 250°C, even more preferably between 150°C and 200°C.

The temperature of the cooking grill 14 can be chosen according to the type of food products to be cooked.
According to possible embodiments, the method provides to keep the food products 100 in step i) for a period of time comprised between 2 and 120 minutes, preferably between 8 and 60 minutes, even more preferably between 15 and 40 minutes.

The method, in some embodiments, provides to rotate the cooking grill 14 around its own axis of rotation X, selectively presenting different zones of the food products 100 facing toward the source of heat 15. The rotation can be intermittent or continuous, according to necessity, just as rotation times and speeds can be chosen always according to necessity.

The method, in some embodiments, provides to move the cooking grill 14 linearly toward/away from the source of heat 15, so as to be able to selectively vary and set a desired distance H between the cooking grill 14, and hence the food products 100 disposed therein, and the source of heat 15.

Advantageously, step i) lasts for such a time as to cause the caramelization of sugars and proteins possibly present on the surface of the food products, known to persons of skill in the field as the "Maillard reaction".

In particular, step i) is sufficiently short to prevent the combustion of fats, if present, on the surface of the food products 100, thus preventing the generation of harmful compounds.

Consequently, step i) allows to confer on the food products the organoleptic properties of food products 100 cooked on the grill.

According to possible embodiments, the method according to the present invention could provide to rotate the food products during step i), individually or collectively, both according to the times obtained experimentally by the Applicant, hence intermittently, or in continuous rotation, so as to allow a uniform pre-cooking on their surface.

According to possible embodiments, the time the food products 100 remain on the cooking grill 14 can be managed by a software or program, associated with the command and control unit 21, which automates at least the beginning, the times of rotation and pause of the grill and/or the end of step i) according to the type of food products to be cooked.

According to possible embodiments, step ii) comprises the insertion of the food products 100 into bags suitable for cooking, the suction of the air present inside the bags and the sealing of the bags by a special vacuum packaging apparatus or device 12.

According to possible embodiments, the method according to the present invention can provide to cool the food products 100 between step i) and step ii).

Advantageously, the cooling between step i) and step ii) can prevent the vacuum packaging, in particular the air suction, from removing the organoleptic characteristics of the cooking on the grill from the food products. The cooling, which preferably takes place in a short time, allows to keep the organoleptic properties inside the food products.

According to possible embodiments, the cooling between step i) and step ii) can take place in an air temperature abatement cell.

According to possible embodiments, step iii) can be carried out by means of a steam oven or similar sous vide cooking device or oven 13.

In accordance with these possible embodiments, step iii) could provide to use a steam oven configured to reach a temperature comprised between 40°C and 125°C, preferably between 50°C and 100°C, even more preferably between 60°C and 80°C.

The temperature of the steam oven can be chosen according to the type of food products to be cooked.

In accordance with these possible embodiments, step iii) could provide to cook the food products 100 in a steam oven for a period of time comprised between 5 and 300 minutes, preferably between 10 and 120 minutes, even more preferably between 15 and 60 minutes.

The time the food products 100 remain in the steam oven can also be chosen according to the type of food products to be cooked.

According to possible embodiments, step iii) could provide, alternatively or in addition, to immerse the food products 100 vacuum-packed in step ii) in a suitable cooking fluid.

According to possible embodiments, the cooking fluid is preferably water at a temperature comprised between 40°C and 100°C, preferably between 50°C and 95°C, even more preferably between 60°C and 90°C. The temperature of the cooking fluid can be chosen according to the type of food products to be cooked.

According to possible embodiments, step iii) could provide to immerse the food products 100 in the cooking fluid for a period of time comprised between 5 and 500 minutes, preferably between 10 and 400 minutes, even more preferably between 20 and 300 minutes.

The time the food products 100 remain in the cooking fluid can also be chosen according to the type of food products to be cooked.

According to possible embodiments, the cooking fluid can be stirred and/or rotated inside a closed circuit.

Advantageously, by regulating the temperature and the time the food products 100 remain immersed in the cooking fluid it is possible to control the denaturing reaction of possible proteins, making them more digestible.

Advantageously, moreover, by regulating the temperature and the time the food products 100 remain immersed it is possible to control the water content, or humidity, inside the food products 100.

Again, if the food product 100 is meat, by regulating the temperature and the time the food products 100 are immersed it is possible to control the dissolution of collagen, giving the meat a softer and tastier consistency.

According to possible embodiments, the method according to the present invention could provide to cool the food products 100 after step iii) by rapid abatement of the temperature.

Advantageously, the rapid abatement of the temperature after step iii), for example to a temperature close to 0°C, can allow lower bacterial proliferation, and can consequently slow down the deterioration of the food products 100 thus obtained, prolonging the shelf-life thereof.

The food products 100 cooked using the method described here, therefore, possess the organoleptic properties of food products cooked on the grill, and can also preserve them for a long time.

According to possible embodiments, the method can also provide a salting step before step i).

According to possible embodiments, the method according to the present invention provides that the vacuum packaging made in step ii) is not removed following step iii) and therefore constitutes the final packaging of the food products 100.

Alternatively, the method according to the present invention provides, following step iii), to remove the vacuum packaging made in step ii) and to make a final packaging.

In particular, the method according to the present invention could provide to open the vacuum packs to remove any residual liquid and/or fat which could make the food product 100 unattractive for a consumer.

According to possible embodiments, the method according to the present invention provides to divide the cooked food product 100 into portions after the opening of the vacuum packs.

By way of example only, the food products could be stored inside trays and packaged in skin pack mode.

Advantageously, the final packaging can be suitable for cooking in a traditional oven and/or in a microwave oven.

According to possible embodiments, the method according to the present invention can also provide a pasteurization step following step iii).

According to possible embodiments, the pasteurization step can be performed hot.

Alternatively, the pasteurization step can be performed cold, that is, using high pressure treatment techniques, such as HHP, High Hydrostatic Pressure or HPP, High Pressure Processing techniques. This high pressure treatment, in fact, performs a "cold" pasteurization by exploiting the high pressure, since the temperature increase in the matrix that is treated is greatly reduced compared to the known thermal pasteurization performed hot. This advantageously allows not only to stabilize the bacterial load but also to maintain the organoleptic properties of the treated food product unaltered.

Subsequently, the method according to the present invention can comprise steps of labeling, canning and palletizing of the food products thus packaged.

Advantageously, the method according to the present invention allows to cook food products free of compounds that are harmful to health.

Moreover, according to possible implementations, the method according to the present invention allows to cook food products that can also be consumed cold or at room temperature.

Embodiments of the present invention also concern a food product obtainable using a method as described above.

It is clear that modifications and/or additions of parts can be made to the method and apparatus 10 for cooking food products as described heretofore, without departing from the field and scope of the present invention.

It is also clear that, although the present invention has been described with reference to some specific examples, a person of skill in the art shall certainly be able to achieve many other equivalent forms of method and apparatus 10 for cooking food products, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Method for cooking food products (100), said method comprising the following steps:
i) pre-cooking said food products (100) on the grill by means of a source of heat (15) and a cooking grill (14) in which said food products (100) are stably positioned, in direct contact with grilling elements (16) of said cooking grill (14), said food products (100) and said cooking grill (14) being reciprocally static during said pre-cooking on the grill, wherein the source of heat (15) heats, by means of irradiation, both said grilling elements (16) and also said food products (100) and is separated and distanced by a distance (H) from said cooking grill (14);
ii) vacuum packaging said food products (100) arriving from said step i); and
iii) cooking sous-vide said food products (100) previously packaged in said step ii).

2. Method as in claim 1, **characterized in that** said cooking grill (14) is configured to reach a temperature comprised between 80°C and 300°C.

3. Method as in claim 1 o 2, **characterized in that** said method provides to keep said food products (100) in said step i) for a period of time comprised between 2 and 120 minutes.

4. Method as in any claim hereinbefore, **characterized in that,** during said step i), said method provides to rotate said food products (100), either individually or collectively, so as to allow a uniform pre-cooking on their surface.

5. Method as in claim 4, **characterized in that** it provides to rotate said cooking grill (14) around its own axis of rotation (X), selectively presenting different parts of said food products (100) facing toward said source of heat (15).

6. Method as in any claim hereinbefore, **characterized in that** it provides to move said cooking grill (14) linearly toward/away from said source of heat (15).

7. Method as in any claim hereinbefore, **characterized in that** between said step i) and said step ii) it provides to cool said food products (100) in a temperature reduction cell using air.

8. Method as in any claim hereinbefore, **characterized in that** said step iii) provides to use a steam oven configured to reach a temperature comprised between 40°C and 125°C.

9. Method as in claim 8, **characterized in that** said step iii) provides to cook said food products (100) in a steam oven for a period of time comprised between 5 and 300 minutes.

10. Method as in any claim hereinbefore, **characterized in that** said step iii) provides to immerse said food products (100) packaged in said step ii) in water with a temperature comprised between 40°C and 100°C.

11. Method as in claim 10, **characterized in that** said step iii) provides to immerse said food products (100) in water for a period of time comprised between 5 and 500 minutes.

12. Method as in any claim hereinbefore, **characterized in that** said method provides that the vacuum packaging obtained in said step ii) is not removed following said step iii) and constitutes the final packaging of said food product (100), or alternatively, following said step iii), said method provides to remove the vacuum packaging obtained in step ii) and to obtain a final packaging.

13. Method as in any claim hereinbefore, **characterized in that** said method also provides a pasteurization step following said step iii).

14. Food product obtainable using a method as in any claim from 1 to 13.

15. Apparatus for cooking food products (100), said apparatus comprising:
- a pre-cooking grilling device (11) comprising a source of heat (15) and a cooking grill (14) in which said food products (100) are able to be positioned in a stable manner, in direct contact with grilling elements (16) of said cooking grill (14), said food products (100) and said cooking grill (14) being reciprocally static during the pre-cooking on the grill, wherein the source of heat (15) is configured to heat by irradiation both said grilling elements (16) and said food products (100) and is separated by a distance (H) from said cooking grill (14);
- a vacuum packaging device (12) for said food products (100) pre-cooked by said source of heat (15) and said cooking grill (14);
- a sous vide cooking device (13) for said vacuum-packed food products (100).
